(19) Europäisches Patentamt

European Patent Office

Office européen des brevets

(11) **EP 1 728 432 A2**

(12) **EUROPEAN PATENT APPLICATION**

(43) Date of publication:
06.12.2006 Bulletin 2006/49

(51) Int Cl.:
*A21D 2/16* (2006.01)   *A21D 10/00* (2006.01)
*A23D 9/02* (2006.01)   *A21D 13/00* (2006.01)

(21) Application number: 06009245.9

(22) Date of filing: 04.05.2006

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: 04.05.2005 EP 05447102

(71) Applicant: **N.V. Vandemoortele
9000 Gent (BE)**

(72) Inventors:
• **Loosveld, Anne-Marie
B-8790 Waregem (BE)**
• **De Laporte, André
9840 De Pinte (BE)**

(74) Representative: **Brants, Johan P.E. et al
De Clercq Brants & Partners
Edgard Gevaertdreef 10a
9830 Sint-Martens-Latem (BE)**

(54) **Pre-mix for bakery products comprising a shortening**

(57)    The present invention relates to a dry pre-mix composition suitable to be admixed with further ingredients such as eggs and/or milk and/or water, in order to form a homogeneous blend, and to be subsequently processed into a bakery product. Said pre-mix comprises 20-50 % by weight of a shortening and 50-80% by weight of additional edible ingredients, such as flour and/or sugar. Said shortening has a moisture content below 5 % by weight, and a solid fat content (SFC) at 20 °C comprised between 0 and 50, whereby the shortening has an amount of solid fat (SF) which increases 24 hours after preparation of said shortening with a factor of 1.5 to 2.5. The present invention also relates to a method for preparing the pre-mix composition, and to bakery products comprising said pre-mix composition.

EP 1 728 432 A2

**Description**

**Field of the invention**

The present invention relates to the field of bakery products. More in particular, the present invention provides a paste-like pre-mix composition for preparing a bakery batter or filling, which is particularly suitable for being further processed to a bakery product by simple addition of fresh ingredients such as eggs and/or milk, and/or the addition of water. The present invention also relates to a method for preparing the pre-mix composition.

**Background**

In the prior art, various methods exist for preparing bakery products. One method consists of traditionally preparing a bakery product by weighing the required ingredients and applying the ingredients according to well-known recipes. Following such method a baker has the freedom to compose its own personal recipes. A tasty bakery product can be produced from fresh ingredients by a person possessing the required skill and willing to spend the considerable time necessary. However, mistakes can easily be made while weighing all required ingredients in such traditional preparation methods. Also, preparation is time-consuming and labor-intensive.

The use of an ingredient mix has greatly simplified the task of a baker in the preparation of bakery products. In the prior art, liquid and powdery ingredient mixes are available. The use of such mixes avoids the problem of assembling the various ingredients and measuring the desired quantities.

Liquid mixes may for instance include a liquid ingredient mix suitable for preparing cakes and the like. Such liquid mix only needs to be poured in a baking tray to be further baked. Another type of liquid mix includes a mix for preparing fillings such as for instances creams, and the like. The latter liquid mix only needs to be whipped to obtain the desired bakery product. Generally, it is not necessary to add additional ingredients to liquid mixes in order to obtain the desired bakery product.

Powdery mixes however need to be completed with additional components such as water, milk, or eggs and optionally also a fat component before the mixes can be further processed to a bakery product.

Although the use of such commercial dry or liquid ingredient mix shortens the time needed for preparation of the products and skill required herefore, it involves disadvantages.

An important disadvantage when using a liquid ingredient mix is that a baker cannot add a personal touch to the preparation process, e.g. by means of adding flavours, colours, decorative ingredients, etc... Furthermore, liquid mixtures for preparing bakery products generally have limited shelf life or preservatives are needed to increase shelf-life.

In the case of using a powdery dry ingredient mix, the obtained bakery products lack the tastiness and appetizing appearance of the traditionally freshly prepared bakery goods. Moreover, although a baker is free to add additional ingredients to the powdery mix, it remains difficult to obtain a good and homogenous blend of these additional ingredients with the powdery mix.

In view of the above, it is clear that there remains a great need in the art for providing pre-mix compositions which overcome at least some of the problems of prior art powdery or liquid ingredient mixtures.

It is therefore an object of the present invention to provide an improved pre-mix composition, which is particularly suitable for being admixed with further ingredients such as milk, eggs, water etc... in order to be easily and rapidly further processed into a bakery product.

It is a further object of the present invention to provide a pre-mix composition which is substantially dry.

It is also an object of the present invention to provide a pre-mix composition having suitable characteristics so as to be easily blended with further fresh ingredients such as eggs, milk, etc...

It is also an object to produce a pre-mix composition for preparation of bakery products which has a considerable shelf-life.

The present invention further aims to provide a pre-mix composition which can be used for preparing tasty bakery products and which can be combined with one or more additional finishing ingredients, according to the personal preferences of a person preparing the bakery goods.

The present invention also aims to provide an improved method for preparing the pre-mix composition, and to improve bakery products containing the pre-mix composition.

**Summary**

This invention relates to a ready-to-use shortening-containing pre-mix composition. The composition is particularly suitable for the preparation of a bakery product, and especially a fat-rich bakery product, having good texture, consistency and taste properties.

In a first aspect the invention provides a pre-mix composition suitable to be admixed with further ingredients such as eggs and/or milk and/or water, in order to form a homogeneous blend and to be subsequently processed into a bakery product. In a preferred embodiment, the invention relates to a dry pre-mix composition adapted for making a bakery batter or filling, said pre-mix comprising 20-50 % by weight of a shortening, whereby said shortening has a moisture content below 5 % by weight, and whereby said shortening has a solid fat content (SFC) at 20 °C comprised between 0 and 50, whereby said shortening has an amount of solid fat (SF) which increases 24 hours after preparation of said shortening with a factor of 1.5 to 2.5. In the prior art, ready-to-use pre-mix compositions for preparing bakery products customarily are made by combining all of the ingredients, including sugar, flour, and shortening. However, when it is desired to make a fat-rich bakery product, which contains high levels of shortening, it may be difficult to incorporate the shortening in the mix and still retain the form of the homogeneous mix. The shortening causes the individual particles of dry powdery ingredients to stick together and form lumps. A very large amount of shortening may cause the mixture to form an undesired creamy mass.

Advantageously, in accordance with the present invention, a shortening is used having optimal characteristics in order to avoid the above-mentioned problems when preparing a pre-mix composition. The obtained pre-mix composition has a paste-like structure and an optimal degree of homogeneity, making it particularly suitable for being easily admixed with further fresh ingredients such as eggs and/or milk, or with water to form a homogenous blend.

In another aspect, the present invention relates to a method for preparing a dry pre-mix composition as defined herein comprising the steps of:

a) preparing a shortening having a solid fat content (SFC) at 20 °C comprised between 0 and 50, and whereby said shortening has an amount of solid fat (SF) which increases 24 hours after preparation of said shortening with a factor of 1.5 to 2.5,
b) bringing said shortening into contact with additional edible ingredients, and
c) mixing said shortening with said edible ingredients in order to obtain said pre-mix composition

wherein step b) is carried out shortly, and preferably immediately after step a). The term "shortly" as used herein refers to a time period which is too short to allow complete crystallization of the shortening. Freshly prepared shortening having not yet undergone complete crystallization, and having the above-indicated SFC and SF values, is shortly or immediately used upon preparation thereof for making the present pre-mix composition. The present shortening therefore has the optimal characteristics and is still sufficiently soft for permitting easy mixture with additional edible ingredients, avoiding the above-mentioned problems when preparing a pre-mix composition.

In yet another aspect the present invention relates to the use of a pre-mix composition as defined herein for the preparation of a bakery product, preferably a fat-rich bakery product.

The present invention also further provides a packaging, such as a container, bar, bag, pouch or the like, comprising a dry pre-mix composition as used herein.

The present invention also relates to a bakery product containing a dry pre-mix composition as defined herein.

**Detailed description of the invention**

Composition

In a first aspect the present invention relates to a pre-mix composition which is particularly suitable for being admixed with further ingredients such as for instance eggs and/or milk and/or water, in order to form a homogeneous blend, and to be subsequently processed into a bakery product.

The term "pre-mix composition" according to the invention is to be construed as being an edible food composition.

The term "bakery product" as used herein may or may not include a baked product.

In accordance therewith, the term "blend" may include a "batter", which is defined as a mixture containing flour or other starch, that is generally used for the production of products such as cakes and breads and the like. A batter needs to be further baked in order to result in the bakery product. The term "blend" may however also refer to a "filling" which is defined as a mixture used to fill pastry or tarts, etc....A filling can be consumed as *such* and does not need to be baked.

The present pre-mix composition is adapted for making a bakery batter or filling. The term "bakery batter" or "bakery filling" as used herein refer to a batter or filling as defined above, which are used to make a bakery product, as defined herein.

In view of the above, it shall therefore be clear, that the present pre-mix composition may be further processed into a bakery product, whereby this processing may, or may not involve a baking step. For instance, the processing of the present pre-mix composition may involve baking of the homogeneous blend. Alternatively, the homogeneous blend obtained by admixing a pre-mix composition as defined herein with further ingredients does not need to be baked but only needs to be whipped for a suitable time period to result in the desired bakery product.

The present pre-mix composition is characterized by a number of parameters.

The pre-mix composition according to the invention is substantially free of water. Water still has to be added to the pre-mix, e.g. in the form of water, eggs and/or milk, to make a bakery product. In one embodiment, the present pre-mix is characterized by its water activity (aw). The term **"water activity"** (aw) refers to water in the composition which is free to evaporate and which could support the growth of bacteria, yeasts and molds (fungi). The water activity scale extends from 0 (bone dry) to 1.0 (pure water). The present invention relates to a dry pre-mix composition.

The term *"dry"* as used herein refers to a composition having a water activity which is lower than 0.85, and preferably lower than 0.83, and more preferably lower than 0.80. Water activity is in practice measured as equilibrium relative humidity (ERH).

The water activity (aw) represents the ratio of the water vapor pressure of the composition to the water vapor pressure of pure water under the same conditions and it is expressed as a fraction. If we multiply this ratio by 100, we obtain the equilibrium relative humidity (ERH) that the composition would produce if enclosed with air in a sealed container at constant temperature. Techniques for measuring the water activity of a product are not disclosed in detail herein, since such techniques are well known to a person familiar with food technology. The present invention thus provides a pre-mix composition having a content which is substantially free of water, and wherein the continuous fatty phase slows down the migration of water to the surface of the composition (drying out) and impedes the growth of micro-organisms. This has the important advantage that development of micro-organisms in the pre-mix composition is significantly reduced.

Another important advantage is that the composition has a longer shelf-life. In addition, the composition does not need to be stored under cool conditions (e.g. 4°C) and substantially no preservatives need to be added to the composition for enabling storage. Compositions provided in accordance with the invention may advantageously be stored at a temperature between 10 and 20°C, preferably between 12°C and 18°C without adding preservatives. Preferably the present pre-mix composition has a minimum of 3 months, preferably of 6 months, preferably of 8 months and more preferably of 12 months of shelf-life, which allows the composition to remain stable in typical ambient conditions of normal use.

It order to be easily mixable to water, eggs and/or milk, consistency of the pre-mix is of importance. Consistency can also be defined as a certain degree of hardness of the pre-mix composition. Consistency of a food composition will generally increase with increasing age of the composition, and may therefore be a limitative factor with regard to storage and shelf-life of such composition. Measuring the consistency of a food product or food composition is well known in the art of food industry and is generally done by means of a TA-XT2 Texture Analyser. A suitable probe (P30° 25mm - conical INOX) is introduced at a speed of 2.0 mm/s to a depth of 10 mm in the composition which has been stored 24 hours at 15°C. The force (expressed in Newton (N)) which is required for this introduction is an indication of the initial hardness of the composition.

In a preferred embodiment, the invention provides a pre-mix composition that has at the time of preparation a consistency measured at 15°C of between 0.15 and 1.50 N, and preferably of between 1.17 and 1.48 N, and more preferably between 1.19 and 1.47 N.

In another preferred embodiment, the invention provides a pre-mix composition that has, when the composition is crystallized, this is for instance 7 days after preparation of the composition, a consistency measured at 15°C which is lower than 6 N and preferably comprised between 1.5 and 5.5 N, and more preferably comprised between 1.8 and 5.0 N.

The pre-mix composition can be further characterized chemically. An important chemical reaction that generally occurs in food systems is lipid oxidation. Lipid oxidation, which is also called auto-oxidation, occurs in lipid-containing materials by way of a free-radical mechanism. After an induction period, hydrogen peroxides, or primary products, are formed. Ultimately these peroxides break down, and secondary products, e.g., aldehydes, ketones, organic acids, and hydrocarbons, are formed. The peroxide value (PV) gives an indication on the extent of lipid oxidation in a food sample and is based on measuring peroxides. The PV is defined as the meq peroxide/$kg_{sample}$. The PV is generally known in the art and can be determined using the well known AOCS method Cd 8-53 (1993). Such method is well known for a person of skill in the art of food technology and will not be described herein in detail. In accordance with the present invention, a composition is provided wherein the peroxide value of said pre-mix composition during shelf-life is lower than 5 meq/kg fat in said composition, and preferably lower than 4.0 meq/kg fat, and for instance lower than 3.0; 2.0 or 1.0 meq/kg fat.

Another chemical reaction that takes place in food compositions is the breakdown of triglycerides into its components; fatty acids and glycerol. The free fatty acid content of a composition can be determined using the well known AOCS method Ca 5a-40 (1993). Such method is well known for a person of skill in the art of food technology and will not be described herein in detail. The present composition is characterised in that the amount of free fatty acids in the pre-mix composition during the shelf-life of said composition is lower than 1% by weight of the total amount of fat in said composition, and preferably lower than 0.5% by weight, and for instance 0.4%, 0.3% or 0.2 % by weight.

The present pre-mix composition is further characterized by its ingredients which are discussed in more detail hereunder.

More in particular, the pre-mix composition according to the invention comprises 20-50 % by weight, and preferably 30 to 40% by weight of a shortening. The present percentages by weight of shortening are well-defined. Using of less than 20% by weight of a shortening in the pre-mix composition results in a non-homogeneous pre-mix composition which is crumbly. Using more than 50% of shortening disadvantageously finally provides a bakery product having a too elevated fat content.

The term *"shortening"* as used herein refers to a fat product, e.g. fats and oils of animal or vegetable origin, used in dough and batters and fillings to impart crisp and crumbly texture to bakery products and to increase the workability of dough. It incorporates tenderness in the food (e.g., bakery products) in which it is used. Non-limitative examples of shortenings include butterfat, animal or vegetable oils/fats.

In a preferred embodiment, the shortening used in a composition of the present invention has a crystallization degree which is lower than 0.9, preferably lower than 0.8, preferably lower than 0.7, preferably lower than 0.6, preferably lower than 0.5. Crystallization refers to the formation of solid crystals in a fat upon cooling the fat. At such crystallization degrees present shortenings retain a paste-like and "soft" appearance, and are particularly suitable in this configuration for being further admixed with other ingredients, including flour and/or sugar. More in particular, when fats are cooled down from a high temperature (so completely melted fat) to temperatures below the melting point, crystals are formed. In such crystallized fat, the liquid fat component is dispersed in and around the solid crystal clumps. The term *"crystallization degree"* as used herein refers to the ratio of the percent solid fat measured at a given time t after production of the shortening to the percent solid fat in an equivalent sample taken immediately after production that has been stored isothermally during 1 hour. The percent solid fat in the shortening is measured by pulse-NMR (Bruker MiniSpec). The technique for determining the crystallization degree of a composition is well known for a person of skill in the art of food industry.

In another preferred embodiment, a shortening is used in a composition of the present invention which has a moisture content below 5 % by weight, and preferably below 3% by weight and even more preferred below 2 % by weight. The term "moisture" as used in this context refers to a concentrated sugar syrup, said sugar syrup comprising up to 10 % by weight of salt.

The used shortening is further characterized by its solid fat content. The term "solid fat content" (SFC) is a measure of the maximum attainable crystallized fat content measured at a series of temperature checkpoints, according to a strictly defined temperature profile (30 minutes melting at 60°C, shock-cooling to 0°C and keeping 1 h at 0°C and 30 minutes at the measuring temperature). It represents the maximum attainable (equilibrium amount) percentage of fat which is solid or in the crystallized form at a given temperature. The SFC values are important indications with regard to melting behavior, crystallization, heat stability at higher temperatures, etc... The SFC parameter is well known by a person of skill in the art.

In an embodiment, the shortening has a solid fat content (SFC) at 20 °C comprised between 0 and 50. In a preferred embodiment, the shortening used in a composition of the present invention has a SFC at different temperatures as indicated in **Table I.**

**Table I** SFC of shortening according to the invention

| temperature (°C) | SFC |
|---|---|
| 10 | 4-70, and preferably 12-70 |
| 15 | 1-60, and preferably 10-60 |
| 20 | 0-50, and preferably 8-50 |
| 25 | 0-40, and preferably 5-40 |
| 30 | 0-28, and preferably 3-28 |
| 35 | 0-17 |

The present shortening is further characterized in that it has a certain amount of solid fat (SF). The *"solid fat of a shortening"* is defined herein as the amount (expressed in %) of solid fat on the total amount of fat in the shortening.

In a preferred embodiment, a shortening is provided having a solid fat (SF) which increases 24 hours after preparation of said shortening with a factor of 1.5 to 2.5, and preferably with a factor of 1.6 to 2.2 and even more preferred of 1.6 to 2.0. The present pre-mix composition thus comprises a shortening having a $SF_{24}$-ratio ($rSF_{24}$) of between 1.5 and 2.5, and preferably of between 1.6 and 2.2, and even more preferred of between 1.6 and 2.0. The $rSF_{24}$ is defined as:

$$rSF_{24} = SF\ t_{24} : SF\ t_0$$

whereby SF to corresponds to the solid fat of the shortening at the time of preparation, e.g. when coming out of a perfector, whereby SF $t_{24}$ corresponds to the SF of the shortening 24 hours after preparation, and

whereby the shortening sample is kept at its original temperature during said 24 hours and SF $t_{24}$ and SF to are measured at this same temperature

In another further embodiment a shortening is provided having a solid fat (SF) which increases 1 hour after preparation of said shortening with a factor of 1.0 to 1.6, and preferably with a factor of 1.1 to 1.5 and even more preferred of 1.1 to 1.4. The present pre-mix composition comprises a shortening having a SF$_1$-ratio (rSF$_1$) of between 1.0 and 1.6 and preferably of between 1.1 and 1.5, and even more preferred of between 1.1 and 1.4. The rSF$_1$ value is defined as:

$$rSF_1 = SF\ t_1 : SF\ t_0,$$

whereby SF to corresponds to the solid fat of the shortening at the time of preparation, e.g. when coming out of a perfector, whereby SF $t_1$ corresponds to the solid fat of the shortening 1 hour after preparation, and

whereby the shortening sample is kept at its original temperature during said 1 hour and SF $t_1$ and SF to are measured at this same temperature.

**Table II** provides examples of solid fats of shortenings measured after preparation (SF to), and measured 1 hour (SF $t_1$), and 24 hours (SF $t_{24}$) after preparation. For example, the SF to of a shortening may be 18. 24 hours later (when fully crystallized) the shortening may have a SF $t_{24}$ at 15°C of 32.

Table II Solid fats (SF) of shortenings according to the invention

| Temperature | SF $t_0$ (%) | SF $t_1$ (%) | SF $t_{24}$ (%) | rSF$_1$ | rSF$_{24}$ |
|---|---|---|---|---|---|
| 13°C | 19 | 24 | 36 | 1.3 | 1.9 |
| 15°C | 18 | 21 | 32 | 1.2 | 1.8 |
| 18°C | 16 | 19 | 27 | 1.2 | 1.7 |

In accordance with the present invention is it very important to use a shortening having the above indicated rSF$_{24}$ and rSF$_1$ values. Such rSF values allow the shortening to remain relatively soft such that powdery edible ingredients can be easily admixed to the shortening. The applicant has surprisingly shown that shortenings having the indicated rSF values retain a paste-like and "soft" appearance, and are particularly suitable in this configuration for being further admixed with other ingredients, including flour and/or sugar. A shortening having the above-indicated characteristics of moisture and rSF values advantageously remains "plastic" at room temperature in order to permit preparation of a uniform dry pre-mix composition, thus making the composition free of flowing and free of lumps.

In a preferred embodiment, the shortening used in a composition of the present invention comprises 90-100% by weight, preferably 95-98% by weight of a fat, 0-2% by weight of water, and 0-5% by weight, preferably 0-3% by weight of an emulsifier.

Suitable fats contained in the present shortening may include but are not limited to fatty oils and fats of animal and/or vegetable origin. The fatty oils and fats may be hydrogenated, partially hydrogenated, interesterified, fractionated, etc... In an example, the oil portion of the shortening can be derived from naturally occurring oils such as soybean oil, sunflower oil, rapeseed oil, corn oil, palm oil, coconut oil, olive oil, cottonseed oil, groundnut oil. Butterfat and/or butter fractions are also a useful fat and can provide flavors to the batters, fillings and finished bakery food products.

Preferably the fat contained in the present shortening comprise saturated fatty acids (SAFA), monounsaturated fatty acids (MUFA) and/or polyunsaturated fatty acids (PUFA). In a preferred embodiment, the fats contained in the present shortening consists of 5-50 % by weight of PUFA's, 15-80 % by weight of MUFA's, and 15-65 % by weight of SAFA's. The PUFA's, MUFA's and SAFA's may for instance respectively comprise linoleic acid, oleic acid, and stearic or palmitic acid.

In another preferred embodiment, the shortening used in accordance with the present invention further comprises one or more vitamins. Suitable vitamins for addition to the present shortening comprise but are not limited to vitamin A, D, E, or combinations thereof. In a preferred embodiment, the amount of vitamin A in the shortening will be within the range of 400 -1000 μg/100g shortening. In another preferred embodiment, the amount of vitamin D in the shortening will be lower than 5 µg /100g shortening. In yet another preferred embodiment, the amount of vitamin E in the shortening will be within the range of 1 - 50 mg/100g shortening. Preferably vitamin E is added.

In addition, the shortening may further comprise one or more additives including but not limited to antioxidants such as for instance butylated hydroxytoluene, butylated hydroxyanisole, tertiary butylhydroquinone, propyl gallate, ascorbyl palmitate, tocopherol, rosemary extract, anti-foaming agents such as for instance DMPS (dimethylpolysiloxane), flavoring agents, coloring agents, etc... or any combinations thereof depending on the intended use of the product. In an example, the shortening further comprises 0-20 ppm of a coloring agent such as beta-caroteen or annatto and/or 0-5% by weight of flavoring agents such as butter flavours, vanilla flavours.

The emulsifier contained in the present shortening may include any suitable food emulsifier, depending on the final properties required in terms of overrun, or other detailed textural attributes. The emulsifier may be selected from the group consisting of one or more of : lecithins, mono-and diglycerides such as succinylated monoglycerides, ethoxylated mono-and diglycerides, acetylated monoglycerides, acetoglycerides, lactylated monoglycerides and citric acid esters of monoglycerides ; polyglycerol esters ; polyhydric alcohol esters such as propylene glycol mono-and diesters of fatty acids and polysorbates ; diacetyl tartaric acid esters of fatty acids such as DAT, DATA, TEM, DATEM which are all commonly used abbreviations for diacetyl tartaric acid esters of monoglycerine; acyl lactylates such as salts of stearoyl-2-lactylates (SSL); and stearyl fumarates.lecithins; mono-and diglycerides; polyglycerol esters; polyhydric alcohol esters; diacetyl tartaric acid esters of fatty acids; acyl lactylates and stearyl fumarates. The emulsifiers are used to improve crumb structure/texture, to increase volume, to improve shelf-life or to have better whipping capacity (less dense products).

In another embodiment the invention relates to a composition which further comprises 50-80 % by weight, and preferably 60-70 % by weight of and preferably of additional edible ingredients. These additional edible ingredients may be selected from the group comprising flour, starches, modified starches, sugar, baking powder, milk proteins, salt, hydrocolloids including biosynthetic gums such as xanthan gum and gellan gum; carragenan, pectins, galactomannans and seed and exudate gums such as gum arabic, guar gum and locust bean gum; cellulose gels and gums such as carboxymethylcellulose (CMC) and modified gellulose gels and gums; herbs such as basil or rosemary, spices such as cinnamon or nutmeg, flavoring compounds such as chocolate or toffee, nuts such as hazelnuts, pecan nuts and almonds, chopped nuts, sliced nuts, fruits including dried fruit such as raisins, sultanas and apple; freeze-dried fruit such as raspberries; coloring ingredients such as e.g. β-carotene, annatto, preservatives such as e.g. sodium- or calciumpropionate, or any combinations thereof. Preferably the additional edible ingredients comprise sugar, flour, baking powder, milk proteins, salts, hydrocolloids and/or custard cream.

Preferably the composition comprises additional edible ingredients, wherein at least 50% thereof, and preferably at least 60 % thereof, and even more preferred at least 70% thereof are powdery, and have an average particle diameter size lower then 800 µm and preferably comprised between 20 µm and 600 µm.

In one embodiment, the invention relates to a pre-mix composition wherein said additional edible ingredient comprises sugar. The ordinary granulated sugars are quite satisfactory, including sucrose, dextrose, maltose, fructose, lactose, and brown and invert sugars, alone or in combination. Preferably, said additional edible ingredient comprises sugar having an average particle size lower then 600 µm.

The amount of the sugar in the pre-mix composition may be within the range of 5 to 50 %, and preferably within the range of 10 to 40 %, of the total weight of the pre-mix composition.

In another embodiment, said additional edible ingredient comprises flour. In general, the flour utilized in the compositions of the present invention are derived from cereal grains such as wheat, corn, oat, barley or rye and the like, with the wheat flours being the most preferred.

It has been found desirable to employ a flour of relatively low moisture content below about 10% by weight, and preferably below 8 % by weight. Procedures for obtaining a flour of desired moisture content are also available. The simplest procedure, of course, is to specify a maximum moisture content to the flour miller so that flour shipments will fall within the specified range. Alternatively, the flour can be subjected to procedures for removing excess moisture such as low heat and/or vacuum. In a preferred example heat-treated flour may be used. Also important here is the fact that the enzymes are inactivated due to the heat treatment. This is important in order to avoid substantial lipase activity and alpha-amylase activity in the pre-mix composition. Absence of a significant enzyme activity in the flour advantageously increases the shelf-life activity of the obtained pre-mix composition.

In another embodiment, it is preferred to use a flour in the present pre-mix composition having a protein level that is balanced at an optimum level ranged from about 8.0 to 14.0%, and preferably from about 9.0 to 11.0%, on the dry weight of the flour. This level is optimum in the sense that it is within a desired range for the variety of bakery products for which the composition is intended. In practice, a flour can be readily milled by commercially available procedures to obtain a flour of desired predetermined protein content. Alternatively, different flours of known protein content can be mixed in predetermined proportions to obtain a blend of flours having an average protein content within the desired range.

In yet another embodiment, it is preferred to use a flour in the present pre-mix composition having an ash content that is lower than 1%, and preferably lower than 0.6%, on the dry weight of the flour.

Preferably said additional edible ingredient comprises flour having an average particle size lower then 300 $\mu$m.

In another preferred embodiment, the present pre-mix composition comprises a flour having a gelatinization peak viscosity which is comprised between 500 and 6000 cP (centipoise). Gelatinization is the process wherein starches are rendered soluble in water by heat. The "gelatinization peak viscosity" as used herein refers to the gelatinization behavior of flour when heated in water followed by cooling down. The treatment may involve keeping at 50°C for 0-2 minutes, warming up to 95°C for 2-12 minutes, cooling to 50°C for 12-20 minutes, keeping the temperature at 50°C for 20-22 minutes. Peak viscosity occurs at the equilibrium point between swelling and polymer leaching, which causes an increase in viscosity; and rupture and polymer alignment which causes a decrease in viscosity. As is well known by a person of skill in the art, the gelatinization peak viscosity is measured by means of a Rapid Visco Analyzer (=RVA).

The amount of the flour in the pre-mix composition may be within the range of 0 to 50 %, and preferably within the range of 0 to 40 %, of the total weight of the pre-mix composition.

In one preferred embodiment the edible ingredients may essentially comprise a combination of sugar and flour. The term "essentially" in this context refers to a combined amount of sugar and flour which comprises more than 50% and preferably more than 70%, and even more preferred more than 80% of the total weight of the additional edible ingredients.

In another preferred embodiment the edible ingredients may comprise a sugar and ingredients suitable for preparing a filling, such as a custard cream. The ingredients for preparing a custard cream filling may for instance include modified starches, milk proteins and the like. In this embodiment, the edible ingredients preferably do not comprise flour.

Preparation method

In another aspect, the invention relates to a method for preparing a dry pre-mix composition adapted for making a bakery batter or filling, and suitable to be admixed with further ingredients such as eggs and/or milk and/or water, in order to form a homogeneous blend, and to be subsequently processed into a bakery product. The method comprising the subsequent steps of:

a) preparing a shortening having a solid fat content (SFC) at 20 °C comprised between 0 and 50, whereby said shortening has an amount of solid fat (SF) which increases 24 hours after preparation of said shortening with a factor of 1.5 to 2.5,

b) bringing said shortening into contact with additional edible ingredients, and

c) mixing said shortening with said edible ingredients in order to obtain said pre-mix composition

wherein step b) is carried out shortly, and preferably immediately after step a).

In accordance with the present method a homogeneous blend is formed containing shortening and additional edible ingredients such as flour and/or sugar in step b), and this blend is then subjected to shearing and crushing forces in step c).

The term "shortly" as used herein refers to a time period which is too short to allow complete crystallization of the shortening. Such time period is adapted to allow crystallization of the shortening to a degree lower than 0.9, and preferably to a degree lower than 0.8, and even more preferably to a degree lower than 0.7. In addition, such time period is preferably sufficient to prepare a shortening of which has an amount of solid fat (SF) which increases 24 hours after preparation of said shortening with a factor of 1.5 to 2.5, and preferably with a factor of 1.6 to 2.2 and even more preferred of 1.6 to 2.0.

In a further preferred embodiment, the invention provides in step a) for the preparation of a shortening having a solid fat content (SFC) at 20 °C comprised between 0 and 50, whereby said shortening has an amount of solid fat (SF) which increases 1 hour after preparation of said shortening with a factor of 1.0 to 1.6, and preferably with a factor of 1.1 to 1.5 and even more preferred of 1.1 to 1.4.

The present method involves a continuous process, wherein the shortening that has been prepared in a shortening-preparing system is immediately - i.e. without interruption-further processed, i.e. further mixed with additional edible ingredients. In a preferred embodiment, the shortening is prepared by the steps of:

- preparing an emulsion of fat and fat-soluble ingredients and optionally adding moisture, as defined above,
- cooling said emulsion below its melting point in order to obtain a cooled emulsion, and
- crystallizing said cooled emulsion by mechanical stirring into a shortening having a solid fat content (SFC) at 20 °C comprised between 0 and 50, whereby said shortening has an amount of solid fat (SF) which increases 24 hours after preparation of said shortening with a factor of 1.5 to 2.5.

In another embodiment the crystallization step comprises crystallizing the cooled emulsion by mechanical stirring into a shortening having a solid fat content (SFC) at 20 °C comprised between 0 and 50, whereby said shortening has an amount solid fat which increases 1 hour after preparation of said shortening with a factor of 1.0 to 1.6.

In practice, in order to obtain a shortening having the herein defined characteristics, use is made of a computerized shortening-preparing system, also known as Scraped Surface Heat Exchangers (SSHE) or Perfectors. In such apparatuses several process parameters such as flow of ingredients, cooling conditions, etc... can be programmed and optimized. Computerized shortening-preparing systems are well known in the art and will not be described in detail herein. A person of skill in the art of shortening preparation will easily know how to program such known shortening-preparing system in order to obtain a shortening having the indicated properties.

Fat-soluble ingredients, which are suitable to be added to the emulsion include but not limited to fat-soluble aromas such as butter flavours, vanille flavours, and emulsifying agents as defined above. Optionally, during preparation of the emulsion, moisture in the form of a concentrated sugar syrup, as defined above, may be added. The amount of moisture added to the emulsion is preferably lower than 5 % and preferably lower than 3 % by weight. Preferably the emulsion is prepared at a temperature comprised between 50 and 60°C. The obtained emulsion is then cooled down below its melting point, preferably to a temperature below 0°C, and more preferably below -5°C. The cooled emulsion will already partially crystallize during the cooling step.

In a preferred embodiment the shortening obtained in step a) of the present method is a shortening as defined herein. In another preferred embodiment, the additional edible ingredients which are brought into contact with the shortening in step b) are those as defined herein.

Preferably, the present method further comprises the step of bringing the shortening obtained in step a) at a temperature of 12 to 20 °C. In addition, the present method also preferably comprises the step of bringing the additional edible ingredients added in step b) at a temperature of 12 to 20 °C.

In a further preferred embodiment said shortening is mixed with said edible ingredients in order to obtain a pre-mix composition in step c). Mixing is preferably preformed at a temperature of 12 to 20°C, and a pressure below 5 bar.

Another important parameter in the present preparation methods includes the speed of mixing said shortening with said edible ingredients in order to obtain said pre-mix composition. In a preferred embodiment, the shortening and the edible ingredients are mixed in a rotatable in-line mixer, having a rotation speed which is lower than 60 turns per minute (tpm), and preferably having a rotation speed comprised between 30 to 60 tpm. The present invention further relates to a method wherein the amount of energy which is taken up by the mixture of said shortening and said edible ingredients in step c) is lower than 21500 J/kg, and preferably lower than 21120 J/kg, and more preferably lower than 20000J/kg. In another preferred embodiment, the temperature increase of the mixture of said shortening and said edible ingredients in step c) is lower than 4 °C and preferably lower than 3.5°C and more preferably lower than 3°C. In an example, the amount of energy which is taken up by the mixture of said shortening and said edible ingredients in step c) is 18480 J/kg and the temperature increase of the mixture of said shortening and said edible ingredients in step c) is 3 °C.

In another embodiment the present method further comprises the step of introducing $N_2$ gas in the shortening obtained in step a). Alternatively or in combination therewith, the present method may also include the step of introducing $N_2$ gas in the composition obtained in step c).

In another embodiment, the invention relates to a pre-mix composition obtainable by a method as defined herein.


Applications

In another aspect the invention relates to the use of a pre-mix composition as disclosed herein for preparing a bakery product, wherein said composition is suitable to be admixed with further ingredients such as eggs and/or milk, in order to form a homogeneous blend, and to be subsequently processed, for instance baked or whipped, into said bakery product. The present dry pre-mix composition is rehydrated to form a batter or filling by adding eggs and/or water and/or milk. Subsequently the rehydrated pre-mix can be further processed into a bakery product.

In another aspect the invention relates to a bakery product containing a pre-mix composition as disclosed herein.

As already mentioned herein, bakery product may include products that are obtained after a baking process, as well as non-baked goods such as fillings, creams, etc... Bakery products that may be prepared using a pre-mix composition according to the present invention include but are not limited to cake, muffins, brownies, brioche, biscuits, cookies, pastries, sweet dough, bread, creme mousseline, eclair, rolls, pancakes, waffles, etc.... The finished bakery products obtained using a pre-mix in accordance with the present invention have a tastiness and appetizing appearance which is similar to those of traditionally freshly prepared bakery goods, even if their processing time is much shorter.

A process for rapidly making a bakery product preferably comprises the steps of:

-    bringing a pre-mix composition as disclosed herein into contact with one or more ingredients such as eggs and/or milk and/or water,
-    optionally adding one or more ingredients selected from the group comprising flavoring compounds, nuts, fruits, coloring ingredients, preservatives or any mixtures thereof, and
-    processing said product in order to obtain a bakery product.

In one embodiment said processing may comprise baking the product to obtain a bakery product.

Said processing may also comprise blending the pre-mix composition with one or more ingredients such as eggs and/or milk and/or water and, optionally, with one or more the additional ingredients, followed by baking the obtained blend for a suitable period of time, at a suitable baking temperature.

The processing may also comprise blending of the pre-mix composition with one or more ingredients such as eggs and/or milk and/or water and, optionally, with one or more the additional ingredients, by whipping during a suitable period of time, typically 3 to 10 minutes. In such case, the obtained bakery product can be consumed as such and does not need to be baked.

Although the invention has particular applications in a non-domestic environment, such as in a bakery or the like, the present composition may also have application for home use

Packaging

In yet another aspect, the invention relates to a packaging suitable for conserving and transporting a pre-mix composition as disclosed herein.

The packaging may consist of a container, plastic bags enclosed or not in a (carton) box, pouchers, bars in wrappers, packaging similar as those for packaging sausages and the like, etc... Most packaging systems are re-closable. The latter two types of packaging have also the advantage that they allow to indicate certain amounts of products on the packaging.

In a preferred example, the packaging consists of a container, e.g. a bucket, having a cover element separately removable from a corresponding bottom element, said container comprising a pre-mix composition as disclosed herein. The present container may be easily and quickly opened for purposes of spooning over the mix directly into a mixing bowl, after which the mix ingredients can be resealed and further fresh ingredients such as milk and/or egg(s) may be added. In addition the container can be easily re-closed such that the whole container unit does not need to be used and finished at once, but can be used over an extended period of time. In the container, the bakery pre-mix compositions as defined herein retain a considerably shelf-life. The container advantageously has a configuration which allows easy dosage of the required amount of pre-mix composition.

Below, the invention is described in a number of preferred embodiments. It should be clear that, depending on its needs and purposes, a person of skill in the art may further adjust these preferred embodiments. By no means the present invention is to be considered as limited by the examples described below.

Examples

Example 1 Pre-mix compositions

The present pre-mix compositions include most of the ingredients of a selected bakery recipe such as fat, sugar, flour, flavours, technical ingredients or additives, etc.... A baker only has to put the present pre-mix composition in a mixing bowl and to add remaining fresh ingredients such as eggs and/or milk.

A first example of a pre-mix composition according to the invention is a pre-mix which is suitable for preparing cakes and the like. The composition comprises: 20 to 40 % by weight of a shortening, 20 to 40% by weight of a flour, 20 to 40% by weight of a sugar, 0 to 1% by weight of baking powder, 0 to 2% by weight of milk proteins, 0 to 1% by weight of salt, and 0 to 0.5% by weight of hydrocolloids.

The cake is prepared by using ¾ of the present pre-mix composition and ¼ eggs. The pre-mix composition is brought in a Hobart mixer and the eggs are added. The cake batter is ready after 3 to 4 minutes of mixing, after which the batter is baked at 220°C for 45 minutes.

In another example a pre-mix composition according to the invention is a pre-mix which is suitable for preparing a filling such as a crème mousseline or the like. The composition comprises: 30 to 40% by weight of a shortening, 10 to 20% by weight of a sugar, and 40 to 50% by weight of an ingredient mix suitable for preparing a custard cream. A commercially available ingredient mix suitable for preparing a custard cream may be used. The crème mousseline is prepared by using 750 g of the pre-mix composition and 900-1000 g of milk. The pre-mix composition for crème mousseline is brought in a bowl. Milk is added and there is whipped for 5 minutes.

Example 2 Preparation of a pre-mix composition

The present example illustrates the preparation of a pre-mix composition according to the invention. For preparing the pre-mix use is made of a mixing system which is coupled to a shortening-preparing system.

According to the state of the art a shortening may be prepared following the steps of forming an emulsion of a fat blend, and cooling the emulsion during which the emulsion crystallizes.

In general, the emulsion is allowed to rest in order to undergo full crystallization. However, in accordance with the present invention, the crystallizing shortening is not allowed to rest, such that it does not undergo full crystallization. While being still only partially crystallized, the shortening is brought into a mixing system wherein it is admixed with additional edible ingredients, such as flour and/or sugar, in order to form a pre-mix composition as defined herein.

It is thus highly desired to use a shortening that has not yet fully crystallized and that is sufficiently soft for allowing easy mixing with the additional edible ingredients. If a fully crystallized shortening is used for preparing the pre-mix composition according to the invention, the energy needed for mixing the shortening with the additional edible ingredients is too high and high temperatures are induced. As a consequence hereof, the starch in the flour may be damaged, which has disadvantageous effects on the end products.

Preferably a pre-mix composition is obtained having optimal characteristics at ambient temperatures of between 10°C and 25°C, an ideal consistency, and suitable for being easily blended with other ingredients such as milk, eggs.

In conclusion, the present method involves a direct connection of a mixing system with a system for producing a shortening. As a result thereof, less energy input is necessary since not fully crystallized shortening (soft shortening that still has to crystallize) can be used for admixing with further edible ingredients (flour, sugar, starch, milk proteins,...). Further crystallization generally is performed after mixing with the additional edible ingredients.

## Claims

1. Dry pre-mix composition adapted for making a bakery batter or filling, said pre-mix comprising 20-50 % by weight of a shortening, whereby said shortening has a moisture content below 5 % by weight, and whereby said shortening has a solid fat content (SFC) at 20 °C comprised between 0 and 50, whereby said shortening has an amount of solid fat (SF) which increases 24 hours after preparation of said shortening with a factor of 1.5 to 2.5.

2. Composition according to claim 1 wherein the pre-mix composition has a water activity (aw) which is lower than 0.80.

3. Composition according to claim 1 or 2, whereby said composition has a minimum of 6 months shelf-life at a storage temperature of between 10 and 18°C.

4. Composition according to any of claims 1 to 3, wherein the pre-mix composition has a consistency which is lower than 6 N.

5. Composition according to any of claims 1 to 4, wherein the amount of free fatty acids in said pre-mix composition during shelf-life is lower than 1% by weight of the total amount of fat in said composition.

6. Composition according to any of claims 1 to 5, wherein the peroxide value of said pre-mix composition during shelf-life is lower than 5 meq/kg fat in said composition.

7. Composition according to any of claims 1 to 6, wherein said shortening comprises 90-100% by weight of a fat, 0-2% by weight of water, and 0-5% by weight of an emulsifier.

8. Composition according to any of claims 1 to 7, wherein said shortening further comprises one or more vitamins selected from the group comprising vitamin A, vitamin D and/or vitamin E.

9. Composition according to any of claims 1 to 8, wherein said shortening comprises 5-50 % by weight of one or more PUFA's, 15-80 % by weight of one or more MUFA's, and 15-65 % by weight of one or more SAFA's.

10. Composition according to any of claims 1 to 9, further comprising 50-80% by weight of additional edible ingredients selected from the group comprising flour, sugar, starches, modified starches, baking powder, milk proteins, salt, hydrocolloids, herbs, flavoring compounds, nuts, fruits, coloring ingredients, preservatives or any combinations thereof.

11. Composition according to any of claims 1 to 10, wherein at least 50% of said additional edible ingredients are powdery, and have an average particle diameter size lower than 800 $\mu$m.

12. Composition according to any of claims 1 to 11, wherein said additional edible ingredient comprises sugar having an average particle size lower then 600 $\mu$m.

13. Composition according to any of claims 1 to 12, wherein said additional edible ingredient comprises flour having a moisture content below 10 % by weight.

14. Composition according to any of claims 1 to 13, wherein said additional edible ingredient comprises flour having a protein content below 14 % by dry weight of the flour.

15. Composition according to any of claims 1 to 14, comprising 20 to 40 % by weight of a shortening, 20 to 40% by weight of a flour, 20 to 40% by weight of a sugar, 0 to 1% by weight of baking powder, 0 to 2% by weight of milk proteins, 0 to 1% by weight of salt, and 0 to 0.5% by weight of hydrocolloids.

16. Composition according to any of claims 1 to 12, comprising 30 to 40% by weight of a shortening, 10 to 20% by weight of a sugar, and 40 to 50% by weight of one or more ingredients suitable for preparing a custard cream.

17. Method for preparing a dry pre-mix composition adapted for making a bakery batter or filling, said method comprising the subsequent steps of:

a) preparing a shortening having a solid fat content (SFC) at 20 °C comprised between 0 and 50, whereby said shortening has an amount of solid fat (SF) which increases 24 hours after preparation of said shortening with a factor of 1.5 to 2.5,
b) bringing said shortening into contact with additional edible ingredients, and
c) mixing said shortening with said edible ingredients in order to obtain said pre-mix composition

wherein step b) is carried out shortly, and preferably immediately after step a).

18. Method according to claim 17, wherein step a) comprises the steps of:

- preparing an emulsion of fat and fat-soluble ingredients,
- cooling said emulsion below its melting point in order to obtain a cooled emulsion, and
- crystallizing said cooled emulsion by mechanical stirring into a shortening having a solid fat content (SFC) at 20 °C comprised between 0 and 50, and whereby said shortening has an amount of solid fat which increases 24 hours after preparation of said shortening with a factor of 1.5 to 2.5.

19. Method according to claim 18 wherein said emulsion is prepared by adding an amount of moisture which is lower than 5 % by weight.

20. Method according to any of claims 17 to 19, wherein said obtained shortening is as defined in claims 1 and 7-9.

21. Method according to claim 17, wherein said additional edible ingredients are as defined in any of claims 1 and 10-14.

22. Method according to any of claims 17 to 21, further comprising the step of bringing the shortening obtained in step a) at a temperature of 12 to 20 °C.

23. Method according to any of claims 17 to 22, further comprising the step of bringing the additional edible ingredients added in step b) at a temperature of 12 to 20 °C.

24. Method according to any of claims 17 to 23, wherein said shortening and said edible ingredients are mixed in step c) at a temperature comprised between 12 and 20°C and at a pressure lower than 5 bar in order to obtain said pre-mix composition.

25. Method according to any of claims 17 to 24, wherein the amount of energy which is taken up by the mixture of said shortening and said edible ingredients in step c) is lower than 21500 J/kg, and preferably lower than 20000J/kg.

26. Method according to any of claims 17 to 25, wherein the temperature increase of the mixture of said shortening and said edible ingredients in step c) is lower than 4 °C and preferably lower than 3°C.

27. Method according to any of claims 17 to 26, further comprising the step of introducing $N_2$ gas in the shortening obtained in step a).

**28.** Method according to any of claims 17 to 27, further comprising the step of introducing $N_2$ gas in the composition obtained in step c).

**29.** A composition obtainable by the method according to any of claims 17 to 28.

**30.** Use of a dry pre-mix composition according to any of claims 1 to 16 and 29 for the preparation of bakery batter or filling.

**31.** A bakery product containing a composition as claimed in any of claims 1 to 16 and 29.

**32.** A packaging containing a dry pre-mix composition according to any of claims 1 to 16 and 29.